# EUROPEAN PATENT APPLICATION

(11) **EP 4 760 491 A1**
(43) Date of publication of application: **17.06.2026**
(21) Application number: 25222287.2
(22) Date of filing: 10.12.2025
(51) Int. Cl.: G06F 8/70, G06F 8/35, G06F 8/71, G06N 3/045, G06F 8/33, G06N 20/00

(54) **GENERATIVE AI DRIVEN SYSTEM AND METHOD FOR EFFICIENT SOFTWARE DEVELOPMENT LIFECYLE PROCESS**

(30) Priority: 11.12.2024 IN 202441097987
(71) Applicant: Mphasis Limited, 560048 Karnataka (IN)
(72) Inventor: ANTIVACKIS, Patrick, 28100 Dreux (FR); VAINCE, Muhammad Atta Ul Haleem, Boulder, 80305 (US); BASKAR, Joel Johnson, Davie, 33325 (US); THURAIARASU, Kavi Arasu, 629701 Kanyakumari (IN)
(74) Representative: Potter Clarkson

(57) **Abstract**

A system (100) and method for generative artificial intelligence driven efficient Software Development Lifecycle (SDLC) process is provided. Multiple options associated with one or more SDLC tools are rendered on a Single Pane of Glass (SPOG) of a Graphical User Interface (GUI) associated with one or more user requirements. One or more SDLC tools data associated with the SDLC tools is indexed based on generated vector embeddings and knowledge graph to determine relationship between the SDLC tools data based on the indexing. One or more prompts are generated based on one or more use cases associated with one or more SDLC stages corresponding to the user requirements. The prompts are analyzed for generating recommendations to resolve issues associated with the respective SDLC stages for carrying out the SDLC process.

## Description

### Field of the invention

The present invention relates generally to the field of software development lifecycle process. More particularly, the present invention relates to generative artificial intelligence driven system and method for providing an efficient software development lifecycle process.

### Background of the invention

Typically, a Software Development Lifecycle (SDLC) process involves various stages for software application development and deployment. The various stages of SDLC process play a vital role in the level of quality of software application during its development and deployment. SDLC process stages include, but are not limited to, planning, requirement gathering and analysis, design development, testing (such as static source code analysis), security analysis, validation of test cases, source code management, and observability. The various stages of SDLC process are carried out using a diverse range of SDLC tools that generate multiple datasets and code. Also, software development teams come across various challenges throughout the SDLC process such as navigating through multiple platforms for accessing SDLC tools' data, identifying issues, vulnerabilities, defects identified with SDLC tools data, determining solutions to such issues, etc., thereby leading to fragmented SDLC process workflows and a lot of cognitive shifts for the developers. Conventionally, one or more developer portals are used to consolidate multiple SDLC tools data into a single platform, however, they still remain fragmented from an Integrated Development Environment (IDE) parlance. Moreover, this process is tedious and time consuming as the developer needs to stay extra focused and is prone to errors.

Nowadays, artificial intelligence (AI) based coding assistants are being used at the development stage of the SDLC. Such assistants increase complexity, as they become another tool that the developer needs to master involving prompt engineering, and lack capability to efficiently integrate with SDLC tools used for the other stages of SDLC process. This lack of integration between AI based coding assistants and SDLC tools increases cognitive load and disrupts efficiency of software development, thereby making it difficult to identify improvement areas and prioritize critical tasks related to software development in the SDLC. Further, it has been observed that typically in existing systems flow and exchange of data between the SDLC tools are not orchestrated.

In light of the aforementioned drawbacks, there is a need for a system and method for assisting in efficient software development and deployment. There is a need for a system and method for providing an efficient software development lifecycle process. There is a need for a system and a method which provides for optimally integrating multiple tools and platforms during SDLC process. Also, there is a need for a system and a method which provides for enhanced integration of AI based assistants with SDLC tools. Further, there is a need for a system and a method which provides for effectively identifying improvement areas and critical tasks related to software development during the SDLC process. Yet further, there is a need for a system and a method which provides for orchestrated flow and exchange of data between the tools used in the SDLC process. Furthermore, there is a need for a system and a method which provides for interpreting and contextualizing the data from SDLC tools to engage AI based assistants effectively and provide for optimization of the outcomes.

### Summary of the invention

In various embodiments of the present invention, a generative artificial intelligence driven system for providing an efficient Software Development Lifecycle (SDLC) process is provided. The system comprises a memory storing program instructions, a processor executing program instructions stored in the memory, and a Large Language Model (LLM) assistance engine executed by the processor. The LLM assistance engine renders multiple options associated with one or more SDLC tools on a Single Pane of Glass (SPOG) of a Graphical User Interface (GUI) associated with one or more user requirements. The LLM assistance engine indexes one or more SDLC tools data associated with the SDLC tools based on generated vector embeddings and knowledge graph to determine relationship between the SDLC tools data based on the indexing. The LLM assistance engine generates one or more prompts based on one or more use cases associated with one or more SDLC stages corresponding to the user requirements. The LLM assistance engine analyzes the prompts for generating recommendations to resolve issues associated with the respective SDLC stages for carrying out an SDLC process.

In various embodiments of the present invention, A generative artificial intelligence driven method for providing an efficient SDLC process is provided. The method is implemented by a processor executing instructions stored in the memory, the method comprises rendering multiple options associated with one or more SDLC tools on a SPOG of a GUI associated with one or more user requirements. The method comprises indexing one or more SDLC tools data associated with the SDLC tools based on generated vector embeddings and a knowledge graph to determine relationship between the SDLC tools data based on the indexing. The method comprises generating one or more prompts based on one or more use cases associated with one or more SDLC stages corresponding to the user requirements. The method comprises analyzing the prompts for generating recommendations to resolve issues associated with the respective SDLC stages for carrying out an SDLC process.

### Brief description of the accompanying drawings

The present invention is described by way of embodiments illustrated in the accompanying drawings wherein:
Fig. 1 is a detailed block diagram of a generative artificial intelligence driven system for efficient software development lifecycle (SDLC) process, in accordance with an embodiment of the present invention;
Fig. 2 illustrates a screenshot of a Graphical User Interface (GUI) depicting an outcome of selecting a software analysis tool option i.e., SonarQube for detecting bugs in the software code, in accordance with an embodiment of the present invention;
Fig. 3 illustrates a screenshot of the GUI depicting a generated prompt for an SDLC stage as per the user requirements;
Figs. 4 and 4A illustrate a Gen AI driven method for efficient software development lifecycle process, in accordance with an embodiment of the present invention; and
Fig. 5 illustrates an exemplary computer system in which various embodiments of the present invention may be implemented.

### Detailed description of the invention

The disclosure is provided in order to enable a person having ordinary skill in the art to practice the invention. Exemplary embodiments herein are provided only for illustrative purposes and various modifications will be readily apparent to a person skilled in the art. The general principles defined herein may be applied to other embodiments and applications without departing from the scope of the invention. The terminology and phraseology used herein is for the purpose of describing exemplary embodiments and should not be considered limiting. Thus, the present invention is to be accorded the widest scope encompassing numerous alternatives, modifications, and equivalents consistent with the principles and features disclosed herein. For purposes of clarity, details relating to technical material that is known in the technical fields related to the invention have been briefly described or omitted so as not to unnecessarily obscure the present invention.

The present invention would now be discussed in context of embodiments as illustrated in the accompanying drawings.

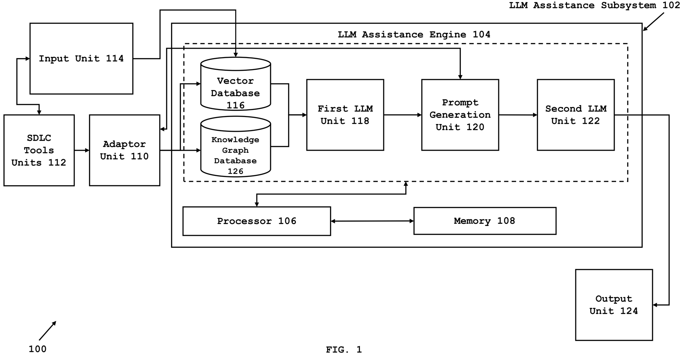

FIG. 1 is a detailed block diagram of a Generative (Gen) AI driven system 100 for providing an efficient software development lifecycle process, in accordance with various embodiments of the present invention. Referring to FIG. 1, in an embodiment of the present invention, the system 100 comprises a Large Language Model (LLM) assistance subsystem 102, an adaptor unit 110, an input unit 114, and an output unit 124. In various embodiments of the present invention, multiple input units 114 and output units 124 can be deployed. The adaptor unit 110 is in communication with a Software Development Life Cycle (SDLC) tools units 112. In an exemplary embodiment of the present invention, the adaptor unit 110, the SDLC tools units 112, the input unit 114, and the output unit 124 are connected to the subsystem 102 via a communication channel (not shown). The communication channel (not shown) may include, but is not limited to, a physical transmission medium, such as, a wire, or a logical connection over a multiplexed medium, such as, a radio channel in telecommunications and computer networking. Examples of radio channel in telecommunications and computer networking may include, but are not limited to, a local area network (LAN), a metropolitan area network (MAN) and a wide area network (WAN). The input unit 114 and the output unit 124 may be a single unit or a separate unit connected to each other. The input unit 114 and the output unit 124 are user devices such as a computer, a laptop, a smartphone, etc. capable of rendering a Graphical User Interface (GUI) and a recommendation prompt or an automation event.

In an embodiment of the present invention, the subsystem 102 is configured with a built-in mechanism for providing Generative Artificial Intelligence (Gen AI) based SDLC for efficient software development and deployment. The subsystem 102 is configured to integrate various SDLC tools into an Integrated Development Environment (IDE). The subsystem 102 is configured to provide a comprehensive view of data from SDLC tools within a single, aggregated information panel, referred to as a "Single Pane of Glass" (SPOG) view. The subsystem 102 is configured to provide Gen AI based prompt generation for catering to issues occurring at different SDLC stages. Further, the subsystem 102 is configured to orchestrate workflow between various SDLC tools and Gen AI assistant extensions, thereby streamlining the software development and deployment process.

In an embodiment of the present invention, the subsystem 102 comprises a Large Language Model (LLM) assistance engine 104 (engine 104), a processor 106, and a memory 108. In various embodiments of the present invention, the engine 104 has multiple units which work in conjunction with each other for providing Generative Artificial Intelligence (Gen AI) powered SDLC for efficient software development and deployment. The various units of the engine 104 are operated via the processor 106 specifically programmed to execute instructions stored in the memory 108 for executing respective functionalities of the units of the engine 104 in accordance with various embodiments of the present invention.

In another embodiment of the present invention, the subsystem 102 may be implemented as a standalone installable program running in an IDE through extensions. In another embodiment of the present invention, the subsystem 102 may be implemented in a cloud computing architecture in which data, applications, services, and other resources are stored and delivered through shared datacenters. In an exemplary embodiment of the present invention, the functionalities of the subsystem 102 are delivered to a user as Software as a Service (SaaS) or Platform as a Service (Paas) over a communication network.

In another embodiment of the present invention, the subsystem 102 may be implemented as a client-server architecture or in an application-based environment. In this embodiment of the present invention, a client terminal accesses a server hosting the subsystem 102 over a communication network. The client terminals may include but are not limited to a smart phone, a computer, a tablet, microcomputer or any other wired or wireless terminal. The server may be a centralized or a decentralized server.

In an embodiment of the present invention, the engine 104 comprises a vector database 116, a first LLM unit118, a prompt generation unit 120, a second LLM unit 122, and a knowledge graph database 126. The first LLM unit 118 and the second LLM unit 122 are employed to infer, refine, and extract a desired outcome. In various embodiments of the present invention, multiple first LLM units 118 and second LLM units 122 can be employed to infer, refine, and extract a desired outcome.

In operation, in an embodiment of the present invention, a user (e.g., software developer, a devops engineer, a quality engineer, etc.) provides one or more inputs via a dashboard of the GUI rendered on the input unit 114 by the engine 104. The user inputs relate to SDLC tools requirements and SDLC tools data associated with a software code. The software code is either a software code which is required to be developed, or which is in a development stage or is already developed or a combination thereof. The SDLC tools requirements include one or more SDLC tools selected by the user. Via the dashboard multiple options associated with one or more SDLC tools are rendered on a Single Pane of Glass (SPOG) of the GUI associated with one or more user requirements based on the user's behavior and criticality of data associated with the user's inputs relating to the selected SDLC tools. One or more parameters associated with the user behavior may include, but are not limited to, user persona or role (e.g., coder, tester, lead, etc.,), SDLC tools usage pattern (e.g., primary focus on defect fixes vs new code, complex vs simple requirement) and SDLC tools preference for a architecture layer or design component (e.g., UI vs service layer). Further, criticality of data associated with the user's inputs may include, but is not limited to, one or more issues caused due to a deployment, defect fix or certain feature implementation, user interventions (e.g., review and approval of code pull requests), aging of tasks or defects, SDLC tools usage analytics, and SDLC and project artifacts (such as Acceptance Test-Driven Development (ADD), Test-Driven Development (TDD), Behavior-Driven Development (BDD), etc.). For example, a user may select a particular SDLC tool with respect to his/her needs such as for developing a software code, or testing a developed software code, etc., and criticality of the data associated with the user needs such as major vulnerability associated with the software code, software code development task approaching the due date, etc. The SPOG renders multiple options of SDLC tools with respect to the user needs.

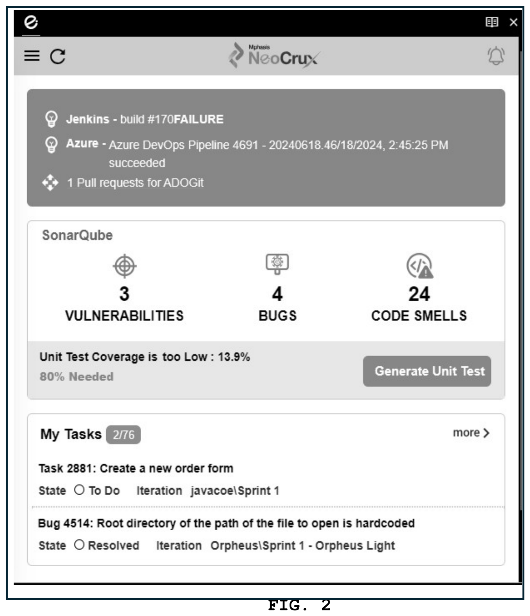

In an embodiment of the present invention, a personalized experience is provided to the user based on his/her usage of the SPOG. In an embodiment of the present invention, personalized experience is provided to the user by analyzing user interactions with the SPOG over time. The user interactions with the SPOG are analyzed based on one or more factors such as time spent on each tool, types of actions performed, and affinity or preference of the user for specific tools or tasks. Further, one or more enterprise-level priorities data is also determined such as carrying out defect fixes for new feature development and carrying out high-priority tasks. The enterprise-level priorities data is determined based on work activity metrics and role-centric context. The work activity metrics comprise identifying frequently completed types of tasks (e.g., bug fixes, refactoring, feature enhancements, etc.) and tracking timeliness in completing assigned work items and determining pending or upcoming tasks to maintain workflow efficiency. The role-centric context relates to users (i.e., developers) being provided active coding tasks, recent commits, and static analysis results and user (i.e., testers) determined defect trends, test coverage gaps, and linked test cases, ensuring quality assurance remains proactive and comprehensive. The options of the SDLC tools correspond to multiple external SDLC tools units 112. The SDLC tools cater to different stages of SDLC required for software development such as requirement analysis, quality assurance, deployment, etc. The options for SDLC tools include, but are not limited to, SonarQube, Polaris, Github repo, Azure Devops board, Jira board, Jenkins CI/CD, Azure Devops pipeline, and Grafana. The user may select any one of the SDLC tools options with respect to his/her requirements. For example, if bugs are required to be detected in a software code, the user may select a software analysis tool option (e.g., SonarQube) rendered on the GUI for detecting bugs in the software code, as illustrated in Fig. 2.

In an embodiment of the present invention, the adaptor unit 110 provides an interface between the vector database 116 and the SDLC tools units 112 for ingesting data from the SDLC tools units 112. The vector database 116 enables the SDLC tools units 112 to be queried for multiple SDLC tools data. In an embodiment of the present invention, the adaptor unit 110 is configured with one or more adaptors associated with multiple SDLC tools. For example, the one or more adaptors may include, but are not limited to, a Software Composition Analysis (SCA) tool adaptor for SonarQube, a Static Application Security Testing tool adaptor for Polaris, a Source Code Management (SCM) tool adaptor for Github repo, a project management board adaptor for Azure Devops board, and Jira board, a CI/CD pipeline adaptor for Jenkins CI/CD, and an observability tool adaptor for Grafana. The vector database 116 indexes the SDLC tools data, received from the SDLC tools units 112, associated with the user inputs received via the input unit 114.

In an embodiment of the present invention, the indexing of different SDLC tools data by the vector database 116 is carried out by generating vector embeddings using specific domain knowledge related to the domain covered by each indexed SDLC tool. The vector embeddings relate to SDLC artifacts such as enterprise domain, enterprise architecture, technical requirements, data model, code, etc. Further, an action taken in each stage of the SDLC is recorded in a knowledge graph which is used in enriching knowledge associated with the SDLC tools data. The knowledge graph is stored in the knowledge graph database 126and contains information associated with the SDLC tools along with identified relationships between data points obtained from different SDLC tools data. The knowledge graph is used to infer new knowledge in respect of data points related to the SDLC tools data. In an exemplary scenario, if the user modifies a section of the code, then the change is observed and recorded in the knowledge graph and the SDLC tools data is reindexed to reflect the change. Subsequent query or action performed uses the updated and reindexed SDLC tools data. Further, the added SDLC ontology representation aids in optimizing the access of data based on the current context. SDLC ontology relates to a formal, machine-interpretable knowledge framework that methodically structures and categorizes concepts, phases, activities, and relationships within the context of SDLC. SDLC ontology aids in tracing of the SDLC processes and determining completeness of the SDLC processes. The SDLC ontology represents relationships, facts and traceability of SDLC processes. In an embodiment of the present invention, the first LLM unit 118 processes the user inputs received via the input unit 114 for determining relationship between SDLC tools data received from the SDLC tools units 112 based on the indexing carried out by the vector database 116.

In an embodiment of the present invention, the prompt generation unit 120 ingests data from one or more selected SDLC tools units 112 via the adaptor unit 110 and processes the ingested SDLC tools data along with the SDLC tools relationship data generated by the first LLM unit 118 to generate optimized prompts to ensure maximum relevancy and quality in the generated prompts. The first LLM unit 118 is configured with one or more custom LLM's including, but are not limited to, vertex AI, anthropic, etc. which communicates with the prompt generation unit 120 for generating intelligent context-aware prompts.

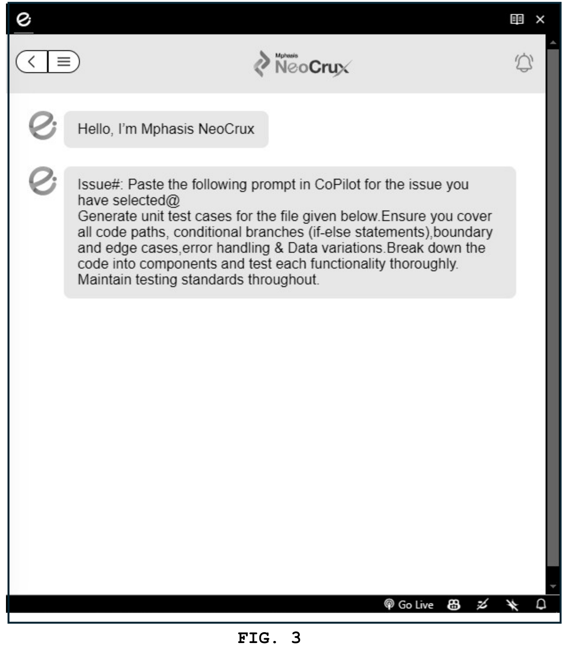

In an embodiment of the present invention, the ingested data includes one or more use cases that represent one or more user stories and historical datasets related to different SDLC tools associated with different SDLC stages. The use cases comprise a logic and a data pivot model which are processed by the prompt generation unit 120 for generating the context-aware prompts. For example, if Polaris SDLC tool is required to be used by the user for testing security of the software code, then the use case comprises a security analysis logic and a security analysis data pivot model. The security analysis removes noise associated with each SDLC tools data by aligning their vocabularies and specificities to a common model which provides additional domain knowledge and expertise to generate quality prompts. The prompts are generated by the prompt generation unit 120 based on the fetched use cases associated with different SDLC stages with respect to the user requirements, as illustrated in Fig. 3.

In an exemplary scenario, the context-aware prompts for 'recording and viewing pet vaccination history' may be provided via a Java Spring Boot pet clinic application. The context-aware prompt for 'data model generation' may be provided as creating a new entity class 'VaccinationRecord' in the model package with 'fields' as 'vaccinationRecordId' (long, primary key, auto-generated), 'pet' (pet, many-to-one relationship with pet entity), 'vaccineName' (string, required, data integrity and validation), 'dateAdministered' (localdate, required, br-013: 'dates must be valid and not in the future'), 'nextDueDate' (localdate, required, BR-013: 'dates must be valid and not in the future'), A one-to-many relationship may be established between 'pet' and 'vaccinationrecord' in the 'pet' entity. The context-aware prompt for 'repository' creation may relate to creating a 'VaccinationRecordRepository' interface extending 'JpaRepository' in the appropriate repository package. The context-aware prompt for 'service layer' may relate to creating a 'VaccinationService' class in the service layer. The context-aware prompt for method may relate to 'addVaccinationRecord(VaccinationRecord vaccinationRecord)': 'saves a new vaccination record to the database'. Further, a validation logic may be implemented to ensure 'dateAdministered' and 'nextDueDate' are valid and not in the future (BR-013). Yet further, the context-aware prompts for system enforcement may include: 'Handle at the service layer with validation logic before persisting'. Further, the context-aware prompts may include 'GetVaccinationHistory(Pet pet)': 'retrieves a list of 'VaccinationRecord' objects for a given pet, ordered by 'dateAdministered' in chronological order', and implement log levels (INFO, WARN, ERROR) appropriately. The context-aware prompt for 'Controller Layer' may relate to modifying the existing 'PetController' to include endpoints for vaccination records. 'Endpoints' may relate to POST /pets/{petId}/vaccinations': 'Add a new vaccination record for a pet', GET /pets/{petId}/vaccinations': 'Retrieve the vaccination history for a pet', 'avoid exposing database entities directly through APIs', and'use Swagger/OpenAPI for API documentation'. Further, the context-aware prompt for 'Pet Profile Page' (JSP) may relate to modifying the pet profile JSP page ('templates') to display the vaccination history. For example, vaccination records may be displayed in a table with columns for vaccine name, date administered, and next due date, and Highlight upcoming or overdue vaccinations based on the 'nextDueDate'. Further, the context-aware prompt for 'Data Validation' may relate to implementing back-end validation in the 'VaccinationService' to ensure that all vaccination entries have valid dates and vaccine names, for instance, front-end validation ensures that date is not empty and not in the future. Further, context-aware prompt for 'Business Rules' may relate to BR-013: 'dates must be valid and not in the future' and 'enforce this rule in the 'VaccinationService' when adding or updating vaccination records'. Further, context aware prompt for veterinary management may include: 'vaccination details must be recorded accurately, including vaccine name, date administered, and next due date'. Further, context-aware prompt for 'Security' may relate to applying proper authentication and authorization layers to the new endpoints. Further, context-aware prompt for 'Unit Tests' may relate to creating unit tests for the 'VaccinationService' to test the 'addVaccinationRecord' and 'getVaccinationHistory' methods, for instance, by using JUnit and Mockito for testing and testing data validation logic. Further, context-aware prompt for 'Integration' may relate to the 'PetController' which is invoked as part of the standard MVC execution flow in the Spring Boot application. Yet further, the context aware prompt may include a prompt that states that the new endpoints will be accessible through the application's web interface.

In an embodiment of the present invention, the second LLM unit 122 receives the generated prompts from the prompt generation unit 120. The generated prompts are analyzed by the second LLM unit 122 for generating recommendations to resolve issues associated with respective SDLC stages for which the specific SDLC tool is selected by the user for carrying out the SDLC process. The recommendations are generated by the second LLM unit 122 by using custom LLM's in conjunction with one or more AI coding assistants such as, Sourcegraph Cody^{®}, Github Copilot^{®}, etc. or by specialized coding LLMs associated with the second LLM unit 122. The recommendations relate to providing a solution to user needs or issues reported by any of the SDLC tools. In another embodiment of the present invention, the second LLM unit 122 is configured to communicate with an organization's knowledge database (not shown) for accessing previously written software codes, business logic, and architectural decisions for efficiently generating recommendations that are compliant with an organization's standards. The recommendations are provided on the output unit 124 via a UI. The recommendations are accessible to the user via the UI for triggering resolution actions associated with issues identified in different SDLC stages.

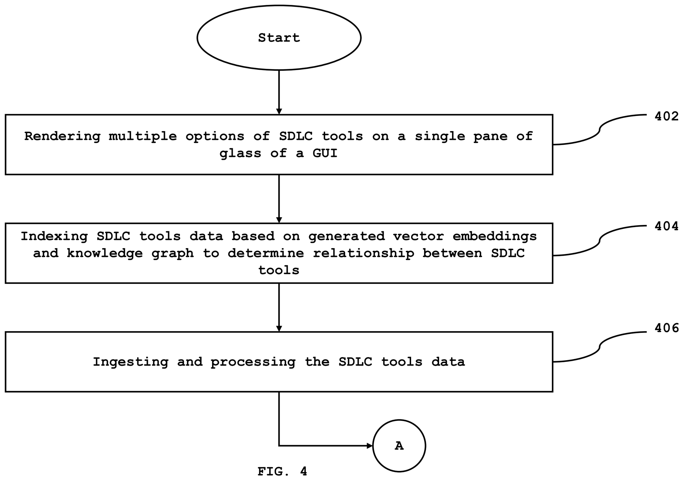

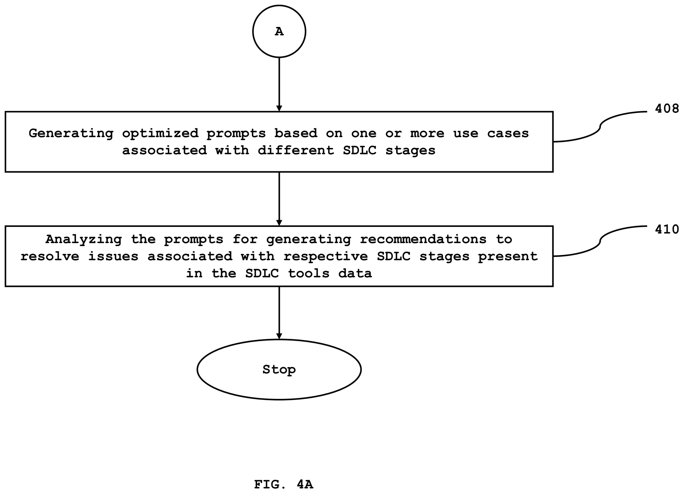

Figs. 4 and 4A illustrate a Gen AI driven method for an efficient software development lifecycle process, in accordance with an embodiment of the present invention.

At step 402, multiple options related to SDLC tools are rendered on a Single Pane of Glass (SPOG) of a GUI. In an embodiment of the present invention, a user (e.g., software developer, a devops engineer, a quality engineer, etc.) provides one or more inputs via a dashboard of the GUI. The user inputs relate to SDLC tools requirements and SDLC tools data associated with a software code. The software code is either a software which is required to be developed, or one which is in a development stage or is already developed or a combination thereof. In an embodiment of the present invention, the SDLC tools requirements include one or more SDLC tools selected by the user. The dashboard renders multiple options associated with one or more SDLC tools on the SPOG of the GUI based on the user behavior and criticality of data associated with the user inputs relating to the selected SDLC tools. One or more parameters associated with the user behavior includes, but are not limited to, user persona or role (e.g., coder, tester, lead, etc.,), SDLC tools usage pattern (e.g., primary focus on defect fixes vs new code, complex vs simple requirement) and SDLC tools preference for a architecture layer or design component (e.g., UI vs service layer). Further, criticality of data associated with the user's inputs includes, but is not limited to, one or more issues caused due to a deployment, defect fix or certain feature implementation, user interventions (e.g., review and approval of code pull requests), aging of tasks or defects, SDLC tools usage analytics, and SDLC and project artifacts (such as Acceptance Test-Driven Development (ADD), Test-Driven Development (TDD), Behavior-Driven Development (BDD), etc.). For example, a user may select a particular SDLC tool with respect to his/her needs such as for developing a software code, or testing a developed software code, etc., and criticality of the data associated with the user needs such as a major vulnerability associated with the software code, software code development task approaching the due date, etc. Therefore, the SPOG renders multiple options of SDLC tools with respect to the user needs.

In an embodiment of the present invention, a personalized experience is provided to the user based on his/her usage of the SPOG. The SDLC tools cater to different stages of SDLC required for software development such as requirement analysis, quality assurance, deployment, etc. In an embodiment of the present invention, personalized experience is provided to the user by analyzing user interactions with the SPOG over time. The user interactions with the SPOG are analyzed based on one or more factors such as time spent on each tool, types of actions performed, and affinity or preference of the user for specific tools or tasks. Further, one or more enterprise-level priorities data is also determined such as carrying out defect fixes for new feature development and carrying out high-priority tasks. The enterprise-level priorities data is determined based on work activity metrics and role-centric context. The work activity metrics comprise identifying frequently completed types of tasks (e.g., bug fixes, refactoring, feature enhancements, etc.) and tracking timeliness in completing assigned work items and determining pending or upcoming tasks to maintain workflow efficiency. The role-centric context relates to users (i.e., developers) being provided active coding tasks, recent commits, static analysis results and user (i.e., testers) determined defect trends, test coverage gaps, and linked test cases, ensuring quality assurance remains proactive and comprehensive. The options for SDLC tools include, but are not limited to, SonarQube, Polaris, Github repo, Azure Devops board, Jira board, Jenkins CI/CD, Azure Devops pipeline, and Grafana. The user may select any one of the SDLC tools options with respect to his/her requirements. For example, if bugs are required to be detected in a software code, the user may select a software analysis tool option (e.g., SonarQube) rendered on the GUI for detecting bugs in the software code.

At step 404, SDLC tools data is indexed by generating vector embeddings and determining relationship between the SDLC tools. In an embodiment of the present invention, the indexing of different SDLC tools data is carried out by generating vector embeddings using specific domain knowledge related to the domain covered by each indexed SDLC tool. The vector embeddings relate to SDLC artifacts such as enterprise domain, enterprise architecture, technical requirements, data model, code, etc. Further, action taken in each stage of SDLC is recorded in a knowledge graph which is used in enriching the knowledge associated with the SDLC tools. The knowledge graph contains information associated with the SDLC tools along with identified relationships between data points obtained from different SDLC tools data. The knowledge graph is used to infer new knowledge in respect of data points related to the SDLC tools data. In an example, if the user modifies a section of the code, then the change is observed and recorded in the knowledge graph and the SDLC tools data is reindexed to reflect the change. Subsequent query or action performed uses the reindexed SDLC tools data. Further, the added SDLC ontology representation aids in optimizing access to data based on the current context. SDLC ontology relates to a formal, machine-interpretable knowledge framework that methodically structures and categorizes concepts, phases, activities, and relationships within the context of SDLC. SDLC ontology aids in tracing of the SDLC processes and determining completeness of the SDLC processes. The SDLC ontology represents relationships, facts and traceability of SDLC processes. In an embodiment of the present invention, the user inputs are processed for determining relationship between SDLC tools data based on the indexing.

At step 406, the SDLC tools data is ingested and processed. In an embodiment of the present invention, SDLC tools data is ingested and the ingested SDLC tools data is processed along with the SDLC tools relationship data to generate optimized prompts to ensure maximum relevancy and quality in the generated prompts. One or more custom LLM's including, but are not limited to, vertex AI, anthropic, etc. are employed for generating intelligent context-aware prompts.

At step 408, optimized prompts are generated based on one or more use cases associated with different SDLC stages. In an embodiment of the present invention, the ingested data includes one or more use cases that represent one or more user stories and historical datasets related to different SDLC tools associated with different SDLC stages. The use cases comprise a logic and a data pivot model which are processed for generating context-aware prompts. For example, if Polaris SDLC tool is required to be used by the user for testing security of the software code, then the use case comprises a security analysis logic and a security analysis data pivot model. The security analysis removes noise associated with each SDLC tools data by aligning their vocabularies and specificities to a common model which provides additional domain knowledge and expertise to generate quality prompts. The prompts are generated based on the fetched use cases associated with different SDLC stages with respect to the user requirements.

At step 410, the prompts are analyzed for generating recommendations to resolve issues associated with respective SDLC stages present in the SDLC tools data. In an embodiment of the present invention, the generated prompts are analyzed for generating recommendations to resolve issues associated with respective SDLC stages for which the specific SDLC tool is selected by the user for carrying out the SDLC process. The recommendations are generated by using custom LLM's in conjunction with one or more AI coding assistants such as, Sourcegraph Cody^{®}, Github Copilot^{®}, etc. or by specialized coding LLMs. The recommendations relate to providing a solution to user needs or issues reported by any of the SDLC tools. In another embodiment of the present invention, an organization's knowledge database is communicated for accessing previously written software codes, business logic, and architectural decisions for efficiently generating recommendations that are compliant with an organization's standards. The recommendations are rendered via a UI. The recommendations are accessible to the user via the UI for triggering resolution actions associated with issues identified in different SDLC stages.

Advantageously, in accordance with various embodiments, the present invention provides for a Gen AI powered SDLC for providing an efficient software development lifecycle process which in turn enhances developer productivity for software development and deployment. The present invention provides for seamlessly integrating various SDLC tools into an Integrated Development Environment (IDE). Also, the present invention provides for enhancing user experience by providing a comprehensive view of data from SDLC tools within a single, aggregated information panel. Further, the present invention significantly reduces the time users spend switching between different tools, allowing them to focus more on their core tasks. Furthermore, the present invention provides for determining and prioritizing tasks which require immediate attention, thereby providing efficient task management and ensures that critical issues are addressed promptly. Yet further, the present invention provides for efficiently and intelligently generating prompts with respect to user requirements. Also, the present invention provides for intelligently orchestrating the flow of workflow from different SDLC tools, ensuring that the right data is presented to the right user at the right time, proposing AI based code to solve reported issues and tasks, thereby optimizing decision-making and reducing likelihood of errors. The present invention provides for monitoring and determining user interaction patterns and learning from the interactions for enhancing user experience. Yet further, the present invention provides for increasing productivity and efficiency of the users, thereby enhancing coding quality, and reducing cognitive load on users by automating repetitive and manual tasks. Furthermore, the present invention provides for interpreting and contextualizing the data from SDLC tools to engage AI based assistants effectively and optimization of the outcomes.

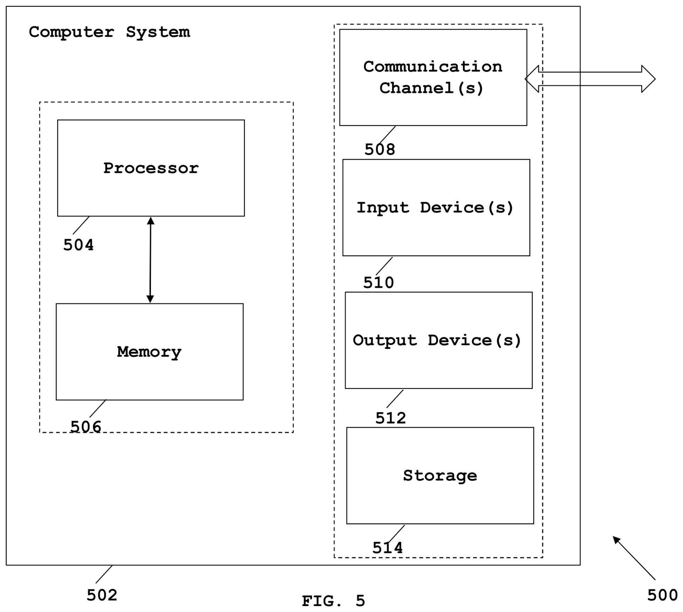

FIG. 5 illustrates an exemplary computer system 502 in which various embodiments of the present invention may be implemented. The computer system 502 comprises a processor 504 and a memory 506. The processor 504 executes program instructions and is a real processor. The computer system 502 is not intended to suggest any limitation as to scope of use or functionality of described embodiments. For example, the computer system 502 may include, but not limited to, a programmed microprocessor, a micro-controller, a peripheral integrated circuit element, and other devices or arrangements of devices that are capable of implementing the steps that constitute the method of the present invention. In an embodiment of the present invention, the memory 506 may store software for implementing various embodiments of the present invention. The computer system 502 may have additional components. For example, the computer system 502 includes one or more communication channels 508, one or more input devices 510, one or more output devices 512, and storage 514. An interconnection mechanism (not shown) such as a bus, controller, or network, interconnects the components of the computer system 402. In various embodiments of the present invention, operating system software (not shown) provides an operating environment for various softwares executing in the computer system 502 and manages different functionalities of the components of the computer system 502.

The communication channel(s) 508 allows communication over a communication medium to various other computing entities. The communication medium provides information such as program instructions, or other data in a communication media. The communication media includes, but are not limited to, wired or wireless methodologies implemented with an electrical, optical, RF, infrared, acoustic, microwave, Bluetooth, or other transmission media.

The input device(s) 510 may include, but not limited to, a keyboard, mouse, pen, joystick, trackball, a voice device, a scanning device, touch screen or any another device that is capable of providing input to the computer system 502. In an embodiment of the present invention, the input device(s) 510 may be a sound card or similar device that accepts audio input in analog or digital form. The output device(s) 512 may include, but not limited to, a user interface on CRT or LCD, printer, speaker, CD/DVD writer, or any other device that provides output from the computer system 502.

The storage 514 may include, but not limited to, magnetic disks, magnetic tapes, CD-ROMs, CD-RWs, DVDs, flash drives or any other medium which can be used to store information and can be accessed by the computer system 502. In various embodiments of the present invention, the storage 514 contains program instructions for implementing the described embodiments.

The present invention may suitably be embodied as a computer program product for use with the computer system 502. The method described herein is typically implemented as a computer program product, comprising a set of program instructions which is executed by the computer system 502 or any other similar device. The set of program instructions may be a series of computer readable codes stored on a tangible medium, such as a computer readable storage medium (storage 514), for example, diskette, CD-ROM, ROM, flash drives or hard disk, or transmittable to the computer system 502, via a modem or other interface device, over either a tangible medium, including but not limited to optical or analogue communications channel(s) 508. The implementation of the invention as a computer program product may be in an intangible form using wireless techniques, including, but not limited to microwave, infrared, Bluetooth, or other transmission techniques. These instructions can be preloaded into a system or recorded on a storage medium such as a CD-ROM or made available for downloading over a network such as the internet or a mobile telephone network. The series of computer readable instructions may embody all or part of the functionality previously described herein.

The present invention may be implemented in numerous ways including as a system, a method, or a computer program product such as a computer readable storage medium or a computer network wherein programming instructions are communicated from a remote location.

While the exemplary embodiments of the present invention are described and illustrated herein, it will be appreciated that they are merely illustrative. It will be understood by those skilled in the art that various modifications in form and detail may be made therein without departing from the scope of the invention.

## Claims

1. A generative artificial intelligence driven system (100) for providing an efficient Software Development Lifecycle (SDLC) process, the system (100) comprises:
a memory (108) storing program instructions;
a processor (106) executing program instructions stored in the memory (108); and
a Large Language Model (LLM) assistance engine (104) executed by the processor (106) and configured to:
render multiple options associated with one or more SDLC tools on a Single Pane of Glass (SPOG) of a Graphical User Interface (GUI) associated with one or more user requirements;
index one or more SDLC tools data associated with the SDLC tools based on generated vector embeddings and a knowledge graph to determine relationship between the SDLC tools data based on the indexing;
generate one or more prompts based on one or more use cases associated with one or more SDLC stages corresponding to the user requirements; and
analyze the prompts for generating recommendations to resolve issues associated with the respective SDLC stages for carrying out an SDLC process.

2. The system (100) as claimed in claim 1, wherein the LLM assistance engine renders the multiple options based on one or more inputs provided by the user via a dashboard of the GUI rendered on an input unit (114), and wherein the inputs relate to SDLC tools requirements and SDLC tools data associated with a software code, and wherein the software code is one or more of: a software code which is required to be developed, or which is in a development stage or is already developed.

3. The system (100) as claimed in claim 2, wherein the SDLC tools requirement comprises one or more SDLC tools selected by a user, and wherein the dashboard renders multiple options associated with the one or more SDLC tools based on the user's behavior and criticality of data associated with the user's inputs relating to the selected SDLC tools.

4. The system (100) as claimed in claim 1, wherein the system (100) comprises an adaptor unit (110) providing an interface between a vector database (116) of the LLM assistance engine (104) and SDLC tools units (112) for ingesting data from the SDLC tools units (112), and wherein the adaptor unit (110) is configured with one or more adaptors associated with multiple SDLC tools.

5. The system (100) as claimed in claim 1, wherein the LLM assistance engine (104) comprises a vector database (116) executed by the processor (106) and is configured to index the SDLC tools data, received from SDLC tools units (112), associated with the user inputs received via the input unit (114), and wherein the vector embeddings are generated using domain knowledge related to a domain covered by each of the indexed SDLC tools, and wherein an action taken in each stage of the SDLC is recorded in the knowledge graph which is used in enriching knowledge associated with the SDLC tools data, and wherein the knowledge graph is stored in a knowledge graph database (126) and contains information associated with the SDLC tools along with identified relationships between data points obtained from different SDLC tools data.

6. The system (100) as claimed in claim 1, wherein the LLM assistance engine (104) comprises a first LLM unit (118) executed by the processor (106) and is configured to process the user inputs received via an input unit (114) for determining a relationship between SDLC tools data received from SDLC tools units (112) based on the indexing carried out by a vector database (116) of the LLM assistance engine (104).

7. The system (100) as claimed in claim 1, wherein the LLM assistance engine (104) comprises a prompt generation unit (120) executed by the processor (106) and is configured to ingest data from one or more selected SDLC tools units (112) via an adaptor unit (110) and processes the ingested SDLC tools data along with the SDLC tools relationship data generated by a first LLM unit (118) to generate optimized prompts, and wherein the first LLM unit (118) is configured with one or more custom LLM's which communicates with the prompt generation unit (120) for generating intelligent context-aware prompts.

8. The system (100) as claimed in claim 1, wherein the one or more use cases represent one or more user stories and historical datasets related to different SDLC tools associated with different SDLC stages, and wherein the use cases comprise a logic and a data pivot model which are processed by a prompt generation unit (120) of the LLM assistance engine (104) for generating prompts.

9. The system (100) as claimed in claim 1, wherein the LLM assistance engine (104) comprises a second LLM unit (122) executed by the processor (106) and is configured to receive the generated prompts from a prompt generation unit (120) for analysis and generate recommendations to resolve issues associated with respective SDLC stages for which the one or more SDLC tools are selected by the user for carrying out the SDLC process, and wherein the recommendations are generated by the second LLM unit (122) by using custom LLM's in conjunction with one or more AI coding assistants or by specialized coding LLMs associated with the second LLM unit (122), and wherein the recommendations relate to providing a solution to user needs or issues reported by the SDLC tools.

10. The system (100) as claimed in claim 9, wherein the second LLM unit (122) is configured to communicate with an organization's knowledge database for accessing previously written software codes, business logic, and architectural decisions for efficiently generating recommendations that are compliant with an organization's standards, and wherein the recommendations are provided on an output unit (124) via a UI, and wherein the recommendations are accessible to a user via the UI for triggering resolution actions associated with issues identified in different SDLC stages.

11. A generative artificial intelligence driven method for providing an efficient Software Development Lifecycle (SDLC) process, the method is implemented by a processor (106) executing instructions stored in the memory (108), the method comprises:
rendering multiple options associated with one or more SDLC tools on a Single Pane of Glass (SPOG) of a Graphical User Interface (GUI) associated with one or more user requirements;
indexing one or more SDLC tools data associated with the SDLC tools based on generated vector embeddings and a knowledge graph to determine relationship between the SDLC tools data based on the indexing;
generating one or more prompts based on one or more use cases associated with one or more SDLC stages corresponding to the user requirements; and
analyzing the prompts for generating recommendations to resolve issues associated with the respective SDLC stages for carrying out an SDLC process.

12. The method as claimed in claim 11, wherein the step of indexing comprises generating vector embeddings using domain knowledge related to a domain covered by each of the indexed SDLC tools and inferring knowledge from the knowledge graph, wherein an action taken in each stage of the SDLC is recorded in the knowledge graph which is used in enriching knowledge associated with the SDLC tools data, the knowledge graph contains information associated with the SDLC tools along with identified relationships between data points obtained from different SDLC tools data, and wherein user inputs comprising SDLC tools requirements and SDLC tools data associated with a software code are processed for determining the relationship between the SDLC tools data based on the indexing.

13. The method as claimed in claim 11, wherein the step of generating the prompts comprises processing ingested SDLC tools data along with SDLC tools relationship data to generate optimized prompts, and wherein one or more custom LLM's are employed for generating intelligent context-aware prompts.

14. The method as claimed in claim 13, wherein the one or more use cases represent one or more user stories and historical datasets related to different SDLC tools associated with different SDLC stages, and wherein the use cases comprise a logic and a data pivot model which are processed for generating prompts.

15. The method as claimed in claim 11, wherein the step of analyzing the prompts comprises generating the recommendations to resolve issues associated with respective SDLC stages for which one or more SDLC tools are selected by the user for carrying out the SDLC process, and wherein the recommendations are generated by using custom LLM's in conjunction with one or more AI coding assistants or by specialized coding LLMs, and wherein the recommendations relate to providing a solution to user needs or issues reported by the SDLC tools.
